# EUROPEAN PATENT APPLICATION

(11) **EP 1 748 369 A1**
(43) Date of publication of application: **31.01.2007**
(21) Application number: 06117804.2
(22) Date of filing: 25.07.2006
(51) Int. Cl.: G06F 17/30

(54) **Information processing apparatus, method, and computer program product for storing files on removable storage media**

(30) Priority: 25.07.2005 JP 2005214636
(71) Applicant: KABUSHIKI KAISHA TOSHIBA, Tokyo 105-8001 (JP)
(72) Inventor: Nagao, Yoji, Minato-ku Tokyo 105-8001 (JP); Suda Yukihiro, Minato-ku Tokyo 105-8001 (JP); Kaneko Yoshihiro, Minato-ku Tokyo 105-8001 (JP)
(74) Representative: Henkel, Feiler & Hänzel

(57) **Abstract**

According to one embodiment, an information processing apparatus includes: an interface unit that receives a storing request for storing a plurality of files onto a plurality of removable storages; and a processing unit that performs a storing process in response to the storing request received by the interface unit, the storing process including storing a subset of the plurality of files and additional information onto at least one of the plurality of removable storages, wherein the additional information includes: file catalog information that indicates a file catalog of the plurality of files that is to be stored onto the plurality of removable storages other than the one of the plurality of removable storages; and correspondence information that indicates correspondences of each of the plurality of files with a corresponding removable storage that stores the each of the plurality of files.

## Description

### CROSS-REFERENCE TO RELATED APPLICATIONS

This application is based upon and claims the benefit of priority from Japanese Patent Application No. 2005-214636, filed on July 25, 2005, the entire contents of which are incorporated herein by reference.

### BACKGROUND

### 1. Field

One embodiment of the invention relates to an information processing apparatus, an information processing method, and a computer program product which are used for processing data with using removable media.

### 2. Description of the Related Art

Recently, an information processing apparatus such as a personal computer can handle large amounts of various data in accordance with increase of the capacity of a hard disk drive. In order to, for example, back up such various data, it is sometimes performed to store a plural data divided among plural removable storage media (hereinafter, referred to as removable media).

For example, Japanese Patent Application Publication (KOKAI) No. 2005-004514 discloses a technique in which plural removable media of a relatively small capacity are used, and when a large amount of data such as AV data are continuously stored, management information of respective data are converted to that in the case where the data are stored onto a single virtual storage medium, and stored into a predetermined memory, whereby divisional storing is enabled while plural files are deemed as one file.

### SUMMARY

However, the publication does not disclose a technique that stores originally independent plural data divided among plural removable media. And when the user intends to read out arbitrary data, according to the technique disclosed in the publication, it is impossible to search and read immediately which removable medium the arbitrary data is stored.

One embodiment of the invention provides an information processing apparatus, an information processing method, and a computer program product which enable desired data to be efficiently read out from plural removable media.

According to an aspect of the invention, there is provided an information processing apparatus including: an interface unit that receives a storing request for storing a plurality of files onto a plurality of removable storages; and a processing unit that performs a storing process in response to the storing request received by the interface unit, the storing process including storing a subset of the plurality of files and additional information onto at least one of the plurality of removable storages, wherein the additional information includes: file catalog information that indicates a file catalog of the plurality of files that is to be stored onto the plurality of removable storages other than the one of the plurality of removable storages; and correspondence information that indicates correspondences of each of the plurality of files with a corresponding removable storage that stores the each of the plurality of files.

The information processing apparatus may further includes a display control unit that obtains the file catalog information from one of the plurality of removable storages that stores the additional information, and controls a display to display the file catalog of the plurality of files based on the obtained file catalog information.

The interface unit may further receive a reading request for reading out one of the plurality of files from one of the plurality of removable storages, wherein the processing unit further performs a reading process in response to the reading request, the reading process including: when the one of the files requested to be read out is stored onto the one of the removable storages, reading out the one of the files; and when the one of the files requested to be read out is not stored onto the one of the removable storage, obtaining information that indicates the corresponding removable storage that stores the one of the files, from the correspondence information stored on the one of the removable storages, and controlling the display control unit to control the display to display the obtained information.

The processing unit may perform the storing process further including determining a required number of the plurality of removable storages and the correspondences, based on sizes of the plurality of files and storage capacities of the plurality of removable storages.

The storing step may sequentially store the plurality of files and the additional information onto the plurality of removable storages.

The processing unit may perform the storing process including: storing, onto a first removable storage included in the plurality of removable storages, a subset of the plurality of files; storing, onto a subsequent removable storage included in the plurality of removable storages, an another subset of the plurality of files and the additional information that includes: the file catalog information indicating the file catalog of the subset of the plurality of files that is stored onto a preceding removable storage; and the correspondence information indicating the correspondences of each of the files stored in the preceding removable storage with the preceding removable storage.

According to another aspect of the invention, there is provided an information processing method that is applied to an information processing apparatus capable of performing a data processing using removal storages . The information processing method includes: receiving a request for storing a plurality of files onto a plurality of removable storages; performing a storing process in response to the received storing request, the storing process including storing a subset of the plurality of files and additional information onto at least one of the plurality of removable storages, wherein the additional information includes: file catalog information that indicates file catalog of the plurality of files that is to be stored onto the plurality of removable storages other than the one of the plurality of removable storages; and correspondence information that indicates correspondences of each of the plurality of files with a corresponding removable storage that stores the each of the plurality of files.

The information processing method may further include: obtaining the file catalog information from one of the plurality of removable storages that stores the additional information; and controlling a display to display the file catalog of the plurality of files based on the obtained file catalog information.

The information processing method may further include: receiving a reading request for reading out one of the plurality of files from one of the plurality of removable storages; performing a reading process in response to the received reading request, the reading process including: when the one of the files requested to be read out is stored onto the one of the removable storages, reading out the one of the files from the one of the removable storages, and when the one of the files requested to be read out is not stored on the one of the removable storages, obtaining information that indicates the corresponding removable storage that stores the one of the files, from the correspondence information stored on the one of the removable storages, and controlling the display to display the obtained information.

The information processing method may further include determining a required number of the plurality of removable storages and the correspondences, based on sizes of the plurality of files and storage capacities of the plurality of removable storages.

The storing step may sequentially store the plurality of files and the additional information onto the plurality of removable storages.

The storing process may further include: storing, onto a first removable storage included in the plurality of removable storages, a subset of the plurality of files; storing, onto a subsequent removable storage included in the plurality of removable storages, an another subset of the plurality of files and the additional information that includes: the file catalog information indicating the file catalog of the subset of the plurality of files that is stored onto a preceding removable storage; and the correspondence information indicating the correspondences of each of the files stored in the preceding removable storage with the preceding removable storage.

According to a further aspect of the invention, there is provided a computer program product for enabling a computer to perform a data processing using removable storages including: software instructions for enabling the computer to perform predetermined operations, and a computer readable medium bearing the software instructions. The predetermined operations includes: receiving a storing request for storing a plurality of files onto a plurality of removable storages; and performing a storing process in response to the received storing request, the storing process including storing a subset of the plurality of files and additional information onto at least one of the plurality of removable storages, wherein the additional information includes: file catalog information that indicates a file catalog of the plurality of files that is to be stored onto the plurality of removable storages other than the one of the plurality of removable storages; and correspondence information that indicates correspondences of each of the plurality of files with a corresponding removable storage that stores the each of the plurality of files.

The predetermined operations may further include: obtaining the file catalog information from one of the plurality of removable storages that stores the additional information; and controlling a display to display the file catalog of the plurality of files based on the obtained file catalog information.

The predetermined operation may further include: receiving a reading request for reading out the one of the plurality of files from one of the plurality of removable storages; performing a reading process in response to the received reading request, the reading process including: when the one of the files requested to be read out is stored onto the one of the removable storages, reading out the one of the files from the one of the removable storages, and when the one of the files requested to be read out is not stored on the one of the removable storages, obtaining information that indicates the corresponding removable storage that stores the one of the files, from the correspondence information stored on the one of the removable storages, and controlling the display to display the obtained information.

The storing process may further include determining a required number of the plurality of removable storages and the correspondences, based on sizes of the plurality of files and storage capacities of the plurality of removable storages.

The storing step may sequentially store the plurality of files and the additional information onto the plurality of removable storages.

The storing process may further include: storing, onto a first removable storage included in the plurality of removable storages, a subset of the plurality of files; storing, onto a subsequent removable storage included in the plurality of removable storages, an another subset of the plurality of files and the additional information that includes: the file catalog information indicating the file catalog of the subset of the plurality of files that is stored onto a preceding removable storage; and the correspondence information indicating the correspondences of each of the files stored in the preceding removable storage with the preceding removable storage.

According to the above configuration, it is possible to efficiently read out desired data from plural removable media.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is a perspective view showing an exemplary appearance of a computer according to an embodiment of the invention;

Fig. 2 is a block diagram showing an exemplary system configuration of the computer of Fig. 1;

Fig. 3 is a block diagram showing an exemplary functional configuration of an information management tool shown in Fig. 2;

Fig. 4 is a view showing an exemplary configuration of additional information to be stored on a removable medium;

Fig. 5 is a conceptual diagram showing an exemplary manner of storing plural data divided among plural removable media in response to a data storing request;

Fig. 6 is a diagram showing an exemplary manner of displaying a file catalog on the basis of the additional information stored on one removable medium;

Fig. 7 is a view showing an example of the hierarchical structure of plural data requested by the user to be stored;

Fig. 8 is a view showing an example of allocation of the plural data shown in Fig. 7 to plural removable media;

Fig. 9 is a view showing an example of media-data correspondence information included in additional information;

Fig. 10 is a view showing an example of a screen for requesting storing data onto removable media;

Fig. 11 is a view showing an example of a screen for requesting insertion of removal medium for storage of data onto removable media;

Fig. 12 is a view showing an example of a screen for notifying completion of storage of all data requested to be stored;

Fig. 13 is a view showing an example of a screen for displaying the file catalog of plural data which are stored on plural removable media on the basis of additional information stored on one removable medium;

Fig. 14 is a view showing an example of a screen in the case where the user conducts an operation of opening a folder C on the screen Fig. 13;

Fig. 15 is a view showing an example of a screen on which identification information of a file g that is in a layer beneath the folder C is displayed;

Fig. 16 is a view showing an example of a screen in the case where the user conducts an operation of opening a folder B on the screen of Fig. 13;

Fig. 17 is a view showing an example of a screen on which a message requesting insertion of a first medium is displayed;

Fig. 18 is a view showing an example of a screen on which identification information of files e, f that are in a layer beneath the folder B is displayed;

Fig. 19 is a flowchart showing an exemplary operation of a data storing process in the embodiment;

Fig. 20 is a flowchart showing an exemplary operation of a data reading process in the embodiment;

Fig. 21 is a conceptual diagram showing a manner of storing plural data divided among plural removable media by a technique different from that of Fig. 5; and

Fig. 22 is a flowchart showing an exemplary operation of a data storing process different from that of Fig. 19.

### DETAILED DESCRIPTION

Various embodiments according to the invention will be described hereinafter with reference to the accompanying drawings. In general, according to one embodiment of the invention, there is provided an information processing apparatus including: an interface unit that receives a storing request for storing a plurality of files onto a plurality of removable storages; and a processing unit that performs a storing process in response to the storing request received by the interface unit, the storing process including storing a subset of the plurality of files and additional information onto at least one of the plurality of removable storages, wherein the additional information includes: file catalog information that indicates a file catalog of the plurality of files that is to be stored onto the plurality of removable storages other than the one of the plurality of removable storages; and correspondence information that indicates correspondences of each of the plurality of files with a corresponding removable storage that stores the each of the plurality of files.

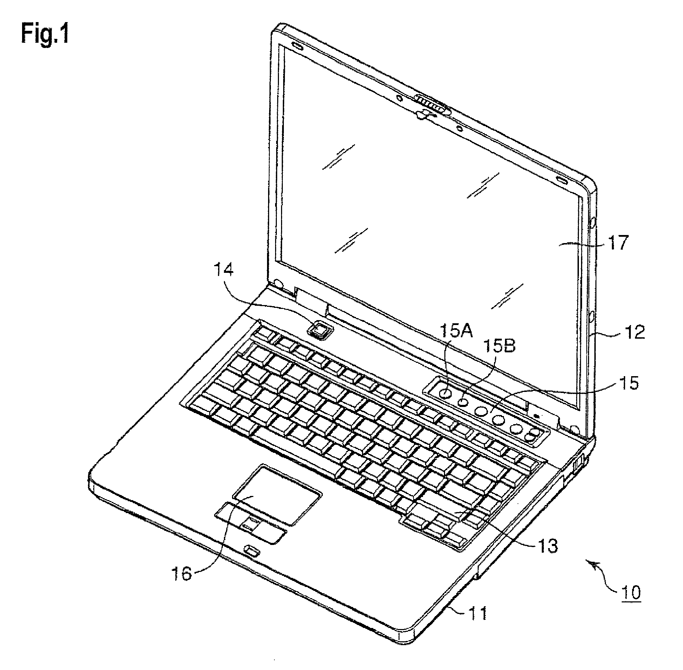

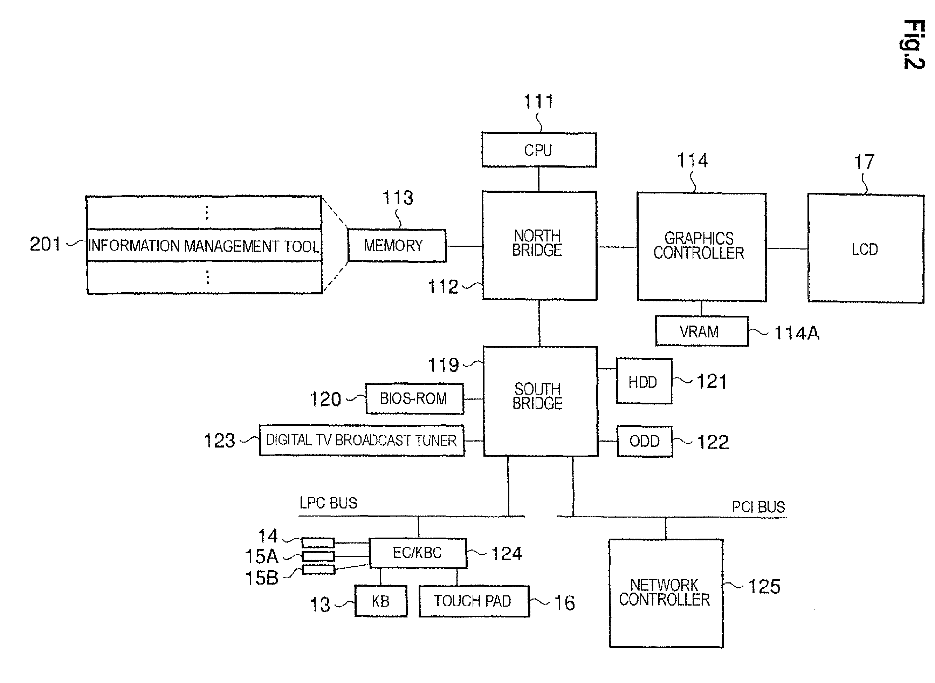

First, the configuration of the information processing apparatus according to an embodiment of the invention will be described with reference to Figs. 1 and 2. The information processing apparatus is realized, for example, as a notebook personal computer 10.

Fig. 1 is a front view of the notebook personal computer 10 in a state where a display unit is opened. The computer 10 is configured by a computer body 11 and the display unit 12. A display device configured by an LCD (Liquid Crystal Display) 17 is incorporated in the display unit 12. The display screen of the LCD 17 is situated at a substantially middle of the display unit 12.

The display unit 12 is attached to the computer body 11 so as to be swingable between an opened position and a closed position. The computer body 11 has a shallow box-like case. A keyboard 13, a power button 14 for powering on/off the computer 10, an input operation panel 15, a touch pad 16, and the like are arranged on the upper face of the case.

The input operation panel 15 is an input device for inputting an event corresponding to a pressed button into a system, and includes plural buttons for directly activating plural functions. The button group includes a TV activation button 15A and a DVD (Digital Versatile Disc) activation button 15B. The TV activation button 15A is a button for activating a TV function which reproduces and stores data of a broadcast program such as a digital TV program. When the user presses the TV activation button 15A, an application program for executing the TV function is automatically activated. The DVD activation button 15B is a button for reproducing video contents stored on a DVD. When the user presses the DVD activation button 15B, an application program for reproducing video contents is automatically activated.

Next, the system configuration of the computer 10 will be described with reference to Fig. 2.

As shown Fig. 2, the computer 10 includes a CPU 111, a north bridge 112, a main memory 113, a graphics controller 114, a south bridge 119, a BIOS-ROM 120, a hard disk drive (HDD) 121, an optical disc drive (ODD) 122, a digital TV broadcast tuner 123, an embedded controller/keyboard controller IC (EC/KBC) 124, and a network controller 125.

The CPU 111 is a processor which controls the operation of the computer 10, and executes the operating system (OS), and various application programs such as an information management tool 201 which are loaded from the hard disk drive (HDD) 121 into the main memory 113.

The CPU 111 executes also a system BIOS (Basic Input Output System) which is stored in the BIOS-ROM 120. The system BIOS is a program for controlling the hardware.

The north bridge 112 is a bridge device which connects between a local bus of the CPU 111 and the south bridge 119. The north bridge 112 incorporates a memory controller which controls the access to the main memory 113, and has a function of executing communication with the graphics controller 114 via an AGP (Accelerated Graphics Port) bus or the like.

The graphics controller 114 is a display controller for controlling the LCD 17 which is used as a display monitor of the computer 10. The graphics controller 114 produces a display signal to be sent to the LCD 17, from image data written into a video memory (VRAM) 114A.

The south bridge 119 controls devices on an LPC (Low Pin Count) bus and a PCI (Peripheral Component Interconnect) bus. The south bridge 119 incorporates an IDE (Integrated Drive Electronics) controller for controlling the HDD 121 and the ODD 122. The south bridge 119 has functions of controlling the digital TV broadcast tuner 123, and controlling the access to the BIOS-ROM 120.

The HDD 121 is a storage apparatus which stores various kinds of software and data (file). The term data includes a data file, an executable file, a folder, a directory. The optical disc drive (ODD) 122 is a drive unit for driving a removable medium (removable storage) such as a DVD on which video contents are stored. The digital TV broadcast tuner 123 is a receiving apparatus for externally receiving broadcast program data such as a digital TV broadcast program.

The embedded controller/keyboard controller IC (EC/KBC) 124 is a one-chip microcomputer in which an embedded controller for managing the electric power, and a keyboard controller for controlling the keyboard (KB) 13 and the touch pad 16 are integrated. The embedded controller/keyboard controller IC (EC/KBC) 124 has a function of powering on/off the computer 10 in accordance with a user's operation on the power button 14. Furthermore, the embedded controller/keyboard controller IC (EC/KBC) 124 can power on the computer 10 in accordance with a user's operation on the TV activation button 15A or the DVD activation button 15B. The network controller 125 is a communication apparatus which performs communication with an external network such as an Internet.

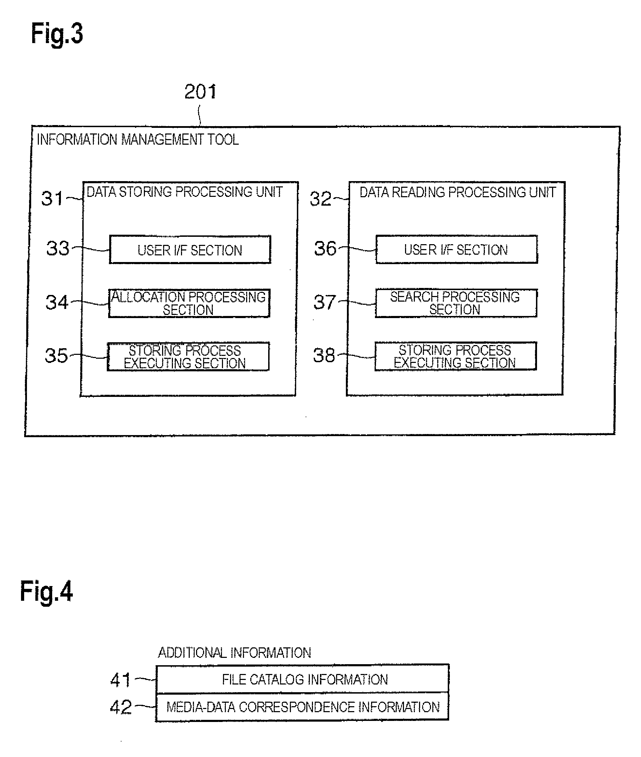

Fig. 3 is a block diagram showing an exemplary functional configuration of an information management tool shown in Fig. 2.

The information management tool 201 is a program for causing the computer 10 to execute information management using a removable medium. In the embodiment, it is assumed that the useful removable medium is, for example, a DVD or a CD (a write once optical disc or a rewritable optical disc) to be inserted into the ODD 122 of Fig. 2. The removable medium is not restricted to this. The useful removable medium may be a magnetic disc, an SD (Secure Digital) memory card, a mobile HDD, or the like.

The information management tool 201 includes a data storing processing unit 31 and a data reading processing unit 32. The data storing processing unit 31 has a user interface section (interface unit) 33, an allocation processing section 34, and a storing process executing section 35. The data reading processing unit 32 has a user interface section (interface unit) 36, a search processing section 37, and a reading process executing section 38.

The user interface section 33 performs a process of interfacing the user with the data storing processing unit 31 via the LCD 17, the keyboard 13/touch pad 16, or the like. The user interface section 33 can receive a request such as that for, for the sake of backup or the like, collectively storing plural data which are designated by the user from various data (files or folders) on the hard disk through the screen, onto removal media.

Based on the sizes of the plural data requested to be stored and the storage capacities of the removable media to be used for storage, the allocation processing section 34 performs a process of calculating a required number of the removable media, and determining onto which removable media the plural data are to be stored respectively.

Based on the allocation determined by the allocation processing section 34, the storing process executing section 35 executes a process of storing the data onto the removable media. When plural data requested to be collective stored are divided and stored among plural removable media, particularly, the storing process executing section 35 sequentially stores part of the plural data, and stores additional information such as shown Fig. 4, onto the respective removable media.

The additional information includes: file catalog information 41 indicative of a file catalog of plural data to be stored onto the plural removable media; and media-data correspondence information (correspondence information) 42 indicative of a correspondence of each of the plural data with a corresponding removable media that stores the each of the plural data. The file catalog information 41 includes, for example, identification information (the file name/folder name, an icon, and the like) for respectively identifying the respective plural data which are stored onto the plural removable media. In the case where there is a folder in data, the file catalog information 41 includes identification information for respectively identifying files/folders in the folder, and information indicative of the hierarchical structure of the folder. By contrast, the media-data correspondence information 42 is expressed by, for example, a combination of a medium serial number and data identification information. The medium serial number is given in the order of insertion of media into the ODD 122 in storing of data (i.e., the order in which the storing of data is performed). Alternatively, the media-data correspondence information 42 may be expressed only by a medium serial number, and this may be made correspondent to the file catalog information 41.

The user interface section 36 performs a process of interfacing the user with the data reading processing unit 32 via the LCD 17, the keyboard 13/touch pad 16, or the like. The user interface section 36 displays data read out from the removable medium in the ODD 122, on the screen. Furthermore, the section can obtain the file catalog information 41 in the additional information read out from one removable medium, and, based on the file catalog information 41, collectively display the file catalog of the plural data stored on the plural removable media, as a list on the screen. Namely, in addition to the file catalog of data stored on one removable medium, the file catalog of data stored on removable media other than the one removable medium can be virtually displayed.

Based on the file catalog information 41 and media-data correspondence information 42 stored on the removable medium, the search processing section 37 performs a process of searching data which are designated to be read out, or the like.

The reading process executing section 38 reads out the additional information from the removable medium, displays the identification information obtained from the additional information obtained from the additional information on the screen via the user interface section 36, reads out data requested to be read out from the removable medium, and displays the data on the screen via the user interface section 36. In the case where the data requested to be read out are stored on the removal medium in the ODD 122, the reading process executing section 38 executes the reading of the data requested to be read out. By contrast, in the case where the data requested to be read out are not stored on the removal medium in the ODD 122, the section refers the media-data correspondence information 42 obtained from the removable medium to obtain information indicative of a removable medium which is the storage destinations of the data, and displays a message requesting insertion of the removable medium into the ODD 122, on the screen. The user unloads the removable medium from the ODD 122, and instead inserts the removable medium indicated by the message into the ODD 122, whereby the desired data can be read out.

In Fig. 3, the configuration in which the information management tool 201 includes both the data storing processing unit 31 and the data reading processing unit 32 is exemplarily shown. Alternatively, a configuration in which the information management tool 201 includes only the data storing processing unit 31 may be possible, or that in which the information management tool 201 includes only the data reading processing unit 32 may be possible.

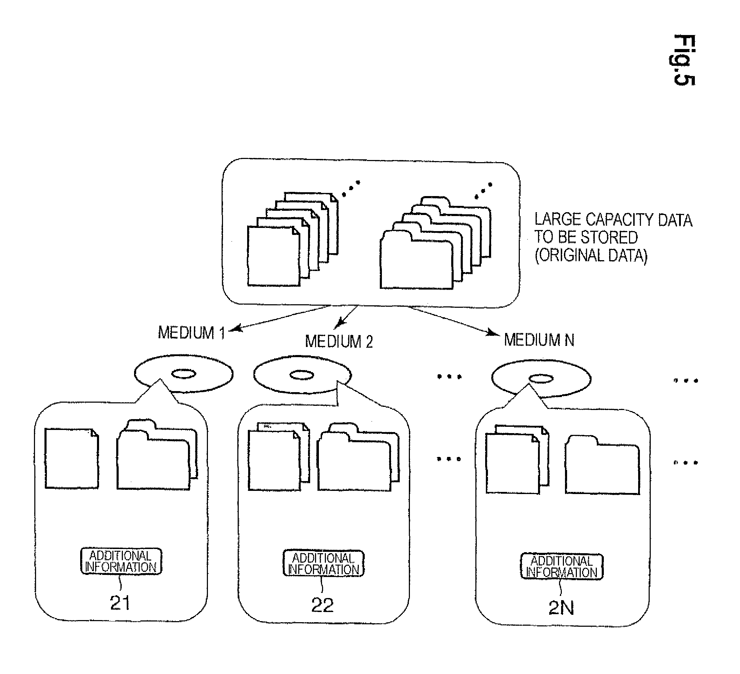

Fig. 5 is a conceptual diagram showing an exemplary manner of storing plural data divided among plural removable media in response to a data storing request.

In the case where the capacities of the plural data (original data) requested to be stored are so large that they cannot be stored onto one removable medium, based on the sizes of the plural data and the storage capacities of removable media, the information management tool 201 calculates a required number N of removable media, and determines allocation of the data to media 1 to N. Based on the allocation result, in the order of the medium 1 to the medium N, partial data (folders and/or files) of the original data are sequentially stored, and also additional information is stored. As shown in Fig. 5, additional information 21 to 2N to be stored onto the media 1 to N correspond to the additional information shown in Fig. 4, respectively.

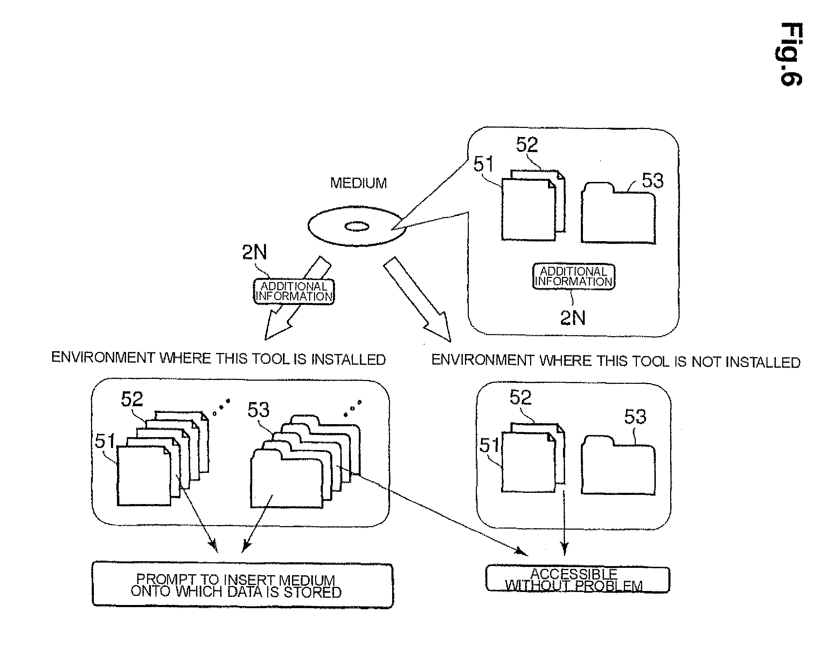

Fig. 6 is a diagram showing an exemplary manner of displaying the file catalog on the basis of the additional information stored on one removable medium.

When the medium N on which files 51, 52 and a folder 53 are stored and the additional information 2N are stored is driven by the ODD 122, for example, the information management tool 201 obtains the additional information 2N from the medium N, and, based on the file catalog information 41 (Fig. 4) included in the additional information 2N, collectively displays the file catalog of plural data (folders and/or files) stored on the media 1 to N, on the screen. Namely, in addition to the identification information of the files 51, 52 and the folder 53 stored on the medium N, the identification information of the data stored on the media 1 to N-1 other than the medium N is displayed.

When the user selects, for example, the identification information of the folder 53 from the displayed identification information to request reading of the folder 53, the folder 53 on the medium N can be accessed and reading of the folder can be performed. When the user selects the identification information of data other than the files 51, 52 and the folder 53 from the displayed identification information to request reading of the data, the information management tool 201 derives the serial number (the number corresponding to the sequence in which the data storage is conducted) of the medium on which the data requested to be read out is stored, on the basis of the media-data correspondence information 42 (Fig. 4) included in the additional information 2N, and displays a message prompting to insert the medium into the ODD 122, on the screen. When the user inserts the pertinent medium into the ODD 122, it is possible to access the data on the medium and read out the data.

Also in a computer in which the information management tool 201 is not installed, it is a matter of course that, when the user selects the identification information of the folder 53 to request reading of the folder 53, the folder 53 on the medium N can be accessed and the folder can be read out. The additional information 2N on the medium N is arranged independently from the files 51, 52 and the folder 53, and the reading process by the computer in which the information management tool 201 is not installed is not hindered.

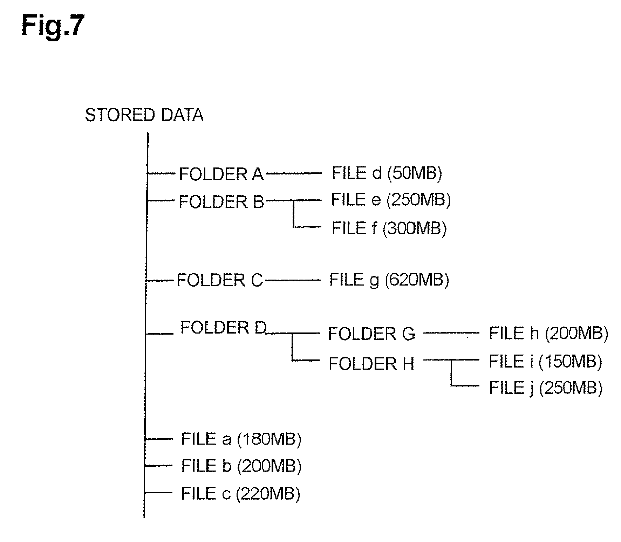

Fig. 7 is a view showing an example of the hierarchical structure of plural data requested by the user to be stored.

The case where plural data requested by the user to be stored are, for example, folders A, B, C, D and files a, b, c will be considered. In this case, it is assumed that the folder A includes a file d, the folder B includes files e, f, the folder C includes a file g, the folder D includes folder G, H, the folder G includes a file h, and the holder H includes files i, j. The identification information and hierarchical structure information of the data shown in the example of Fig. 7 correspond to the above-mentioned file catalog information 41.

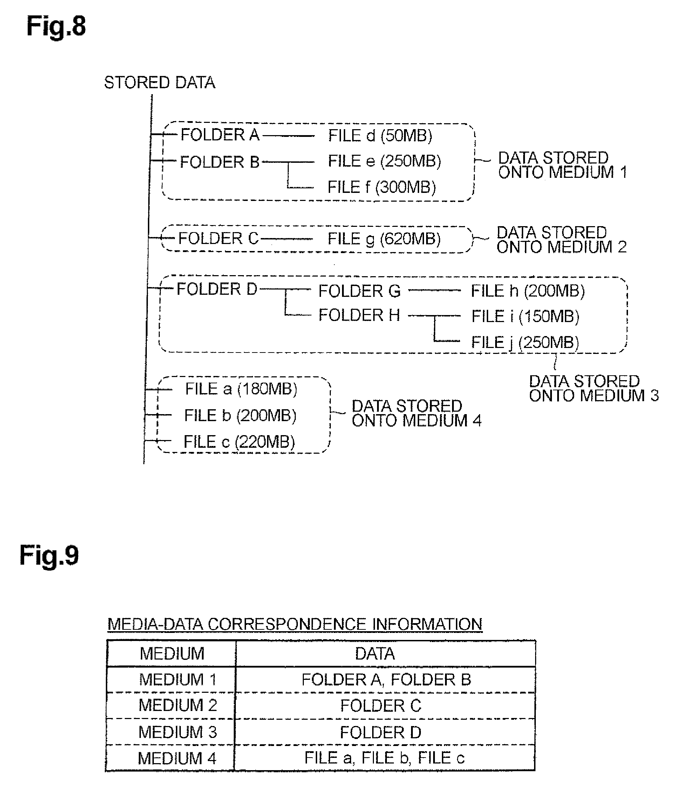

Fig. 8 is a view showing an example of allocation of the plural data shown in Fig. 7 to plural removable media.

When receiving a request for storing the folders A, B, C, D and the files a, b, c into removable media, the information management tool 201 obtains information of the sizes of the data, and information of the storage capacities of removable media to be used in the storage. In the case where the storage capacities of the used removable media are 650 MB, and the sizes of the folders A, B, C, D and files a, b, c are 50 MB, 550 MB, 620 MB, 600 MB, 180 MB, 200 MB, and 220 MB, it is determined that four removable media are required, and allocation shown in Fig. 8 is performed. In the example of Fig. 8, allocation in which the folders A, B are stored onto the medium 1, the folder C is stored onto the medium 2, the folder D is stored onto the medium 3, and the files a, b, c are stored onto the medium 4 is performed. In this case, based on the allocation result shown in Fig. 8, the above-mentioned media-data correspondence information 42 is produced as correspondence information shown in, for example, Fig. 9.

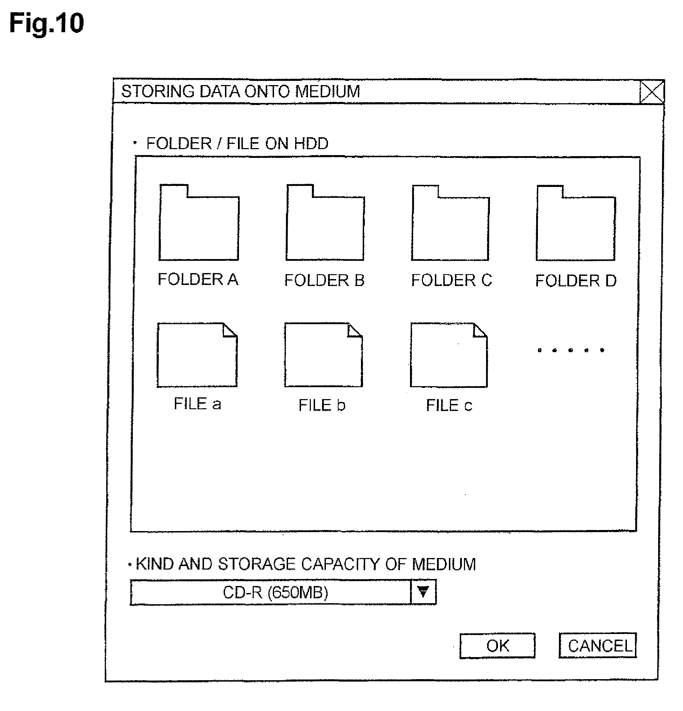

Fig. 10 is a view showing an example of a screen for requesting storing data onto removable media.

In the example of Fig. 10, a region where identification information (the file name/folder name, an icon, and the like) of the data on the hard disk is displayed, and that for designating the kind and storage capacity of a medium to be used in the data storage are disposed. For example, the user selects "Folder A, Folder B, Folder C, Folder D, File a, File b, File c" as data to be stored, designates "CD-R (650 MB)" as media to be used in the storage, and presses an OK button, thereby executing the request for storing the data.

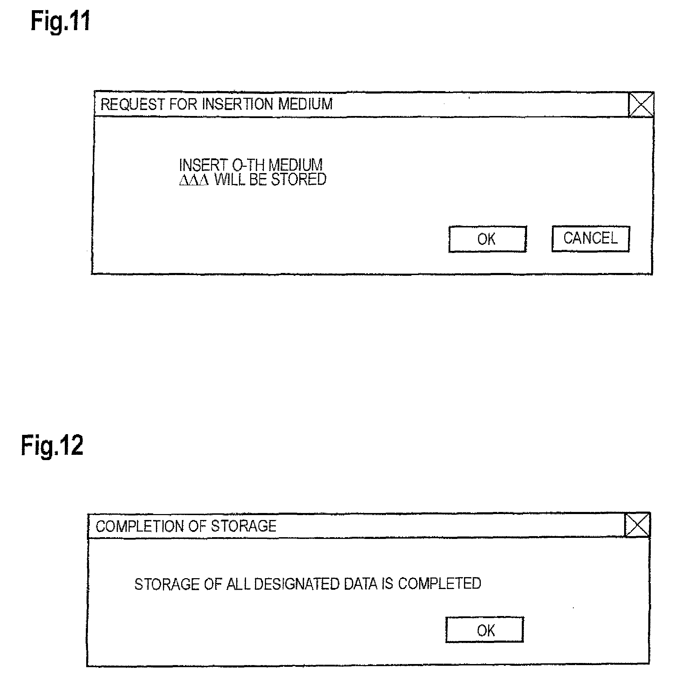

Fig. 11 is a view showing an example of a screen for requesting insertion of a medium for storage of data onto removable media.

Upon receiving the above-mentioned request for storing data, the information management tool 201 starts a process of sequentially storing the plural data requested to be stored, onto plural removable media (for example, the media 1 to 4). Initially, insertion of a first medium or the medium 1 is requested, and, when the user inserts the medium 1, storing of pertinent data and additional information is executed. When the storage is completed, insertion of a second medium or the medium 2 is then requested, and, when the user inserts the medium 2, storing of pertinent data and additional information is executed. Thereafter, a similar process is executed on a third medium or the medium 3, and a fourth medium or the medium 4. When the storage of all the data requested to be stored is completed, a screen such as that shown in Fig. 12 is displayed.

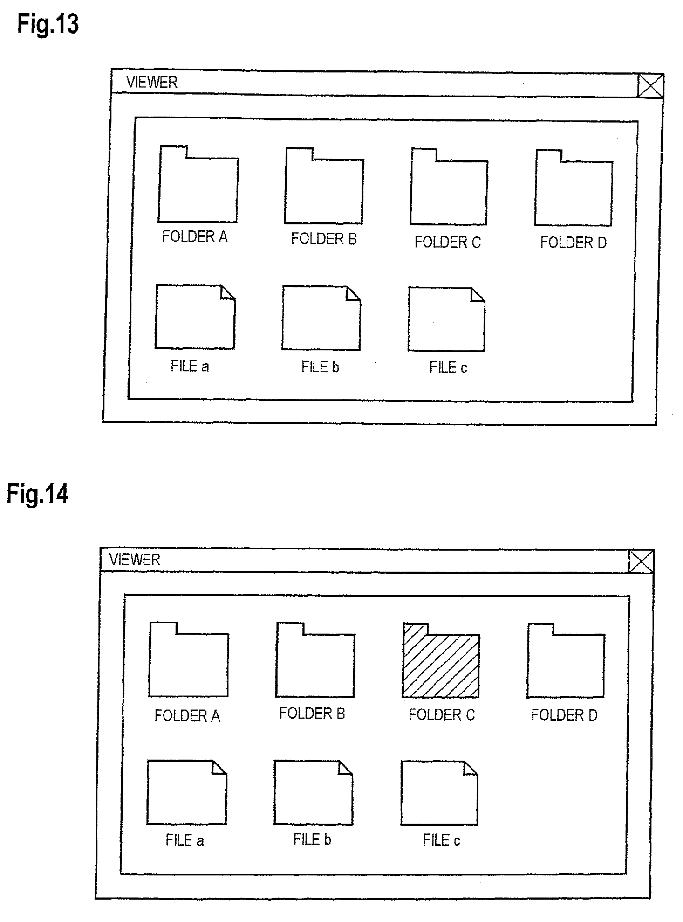

Fig. 13 is a view showing an example of a screen for displaying the file catalog of plural data which are stored on plural removable media on the basis of additional information stored on one removable medium.

The case where, for example, the medium 2 on which the folder C and additional information are stored is driven via the ODD 122 will be considered. In this case, the information management tool 201 obtains the additional information from the medium 2, and, based on the file catalog information 41 (Fig. 4) in the additional information, displays the identification information of the folder A, folder B, folder C, folder D, file a, file b, and file c which are stored onto the media 1 to 4, as shown in Fig. 13. Based on the media-data correspondence information 42 (Fig. 4) in the additional information obtained from the medium 2, the information management tool 201 recognizes which media respectively store the data. However, information indicative of this is not displayed in the screen example of Fig. 13.

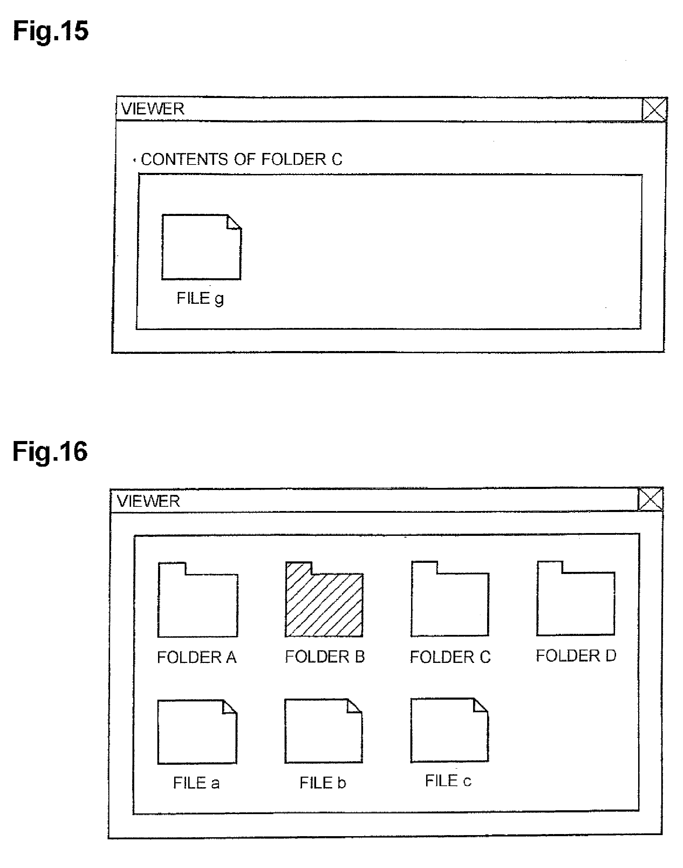

An exemplary case where, as shown in Fig. 14, the user conducts an operation of opening the folder C in the screen of Fig. 13 will be considered. The folder C is stored on the medium 2 which is currently inserted in the ODD 122. As shown in Fig. 15, therefore, the information management tool 201 displays the identification information of the file g which is in a layer beneath the folder C, based on the file catalog information 41 in the additional information obtained from the medium 2. When an operation of opening the file g is conducted, the contents of the file g stored on the medium 2 are displayed.

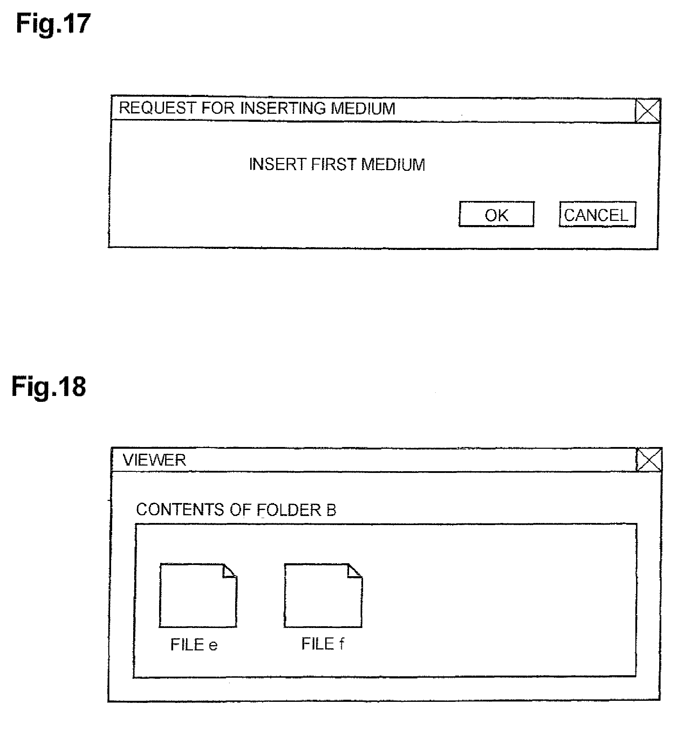

Next, an exemplary case where, as shown in Fig. 16, the user conducts an operation of opening the folder B in the screen of Fig. 13 will be considered. The folder B is stored on the medium 1 which is not currently inserted in the ODD 122. As shown in Fig. 17, therefore, the information management tool 201 displays a message requesting that the medium 2 is unloaded from the ODD 122, and the medium 1 is inserted. When the user inserts the medium 1 into the ODD 122, the information management tool 201 displays the identification information of the files e, f which are in a layer beneath the folder B, as shown in Fig. 18. When an operation of opening the file e or f is conducted, the information management tool 201 displays the contents of the file e or f stored on the medium 1.

The process flow may be modified so that, after the user conducts the operation of opening the folder B in the screen of Fig. 16, the screen of Fig. 18 is displayed instead of the screen of Fig. 17, the screen of Fig. 17 is displayed when the operation of opening the file e or f is conducted, and, after the user inserts the medium 1 into the ODD 122, the contents of the file e or f are displayed.

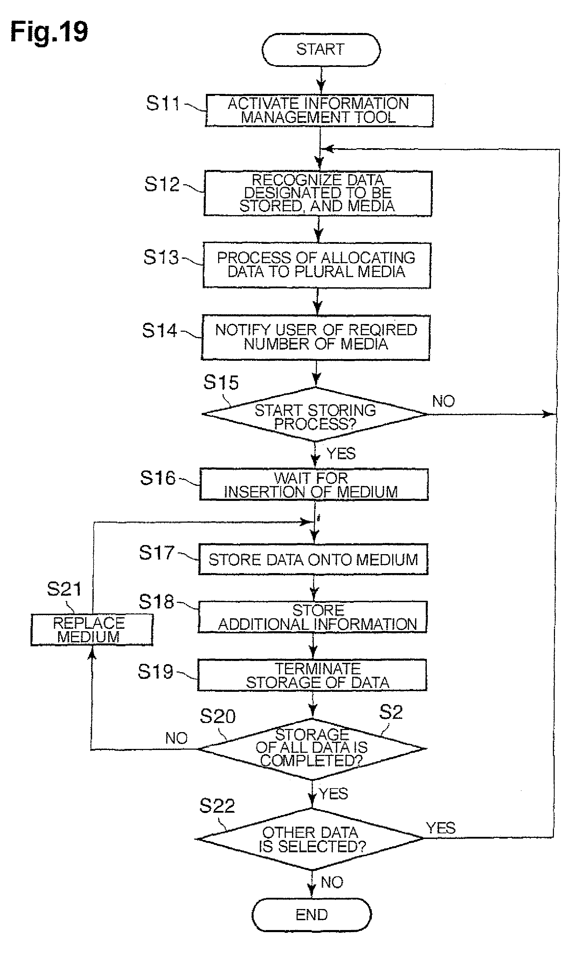

Next, the operation of the process of storing data in the embodiment will be described with reference to Fig. 19.

The information management tool. 201 which is installed in the computer 10 is activated (block S11), and a screen for, for example, requesting storing of data onto a removable medium is displayed. In the screen, the user selects plural data to be stored, designates the kind and size of removable media to be used in the storage, and then executes the storing request. The information management tool 201 receives the storing request, and recognizes the contents of the request (block S12).

Based on the sizes of the plural data requested to be stored, and the storage capacities of the removable media to be used in the storage, the information management tool 201 calculates a required number of removable media, and performs an allocation process of determining onto which removable media the plural data are to be stored respectively (block S13).

The information management tool 201 displays a message indicating the required number of the designated removable media (block S14), and waits for user instructions for starting the storing process (block S15). When the storing process is instructed to start, the information management tool 201 displays a message prompting to insert the first removable medium, and enters a state waiting for insertion of the medium (block S16).

When a removable medium is inserted, the information management tool 201 stores part of the plural data requested to be stored, onto the removable medium (block S17), stores additional information related to the plural data requested to be stored (block S18), and terminates the storing process on the removable medium (block S19).

The information management tool 201 determines whether the storage of all the data requested to be stored is completed or not (block S20). If not completed, the tool displays a message prompting to replace the removable medium with another one (block S21), and the process starting from block S17 is repeated.

After the storage of all the data requested to be stored is completed, the information management tool 201 determines whether the user further requests the storage of data other than the plural data or not (block S22). If the further data storage is requested, the process starting from block S12 is repeated, and, if no further data storage is requested, the process is terminated.

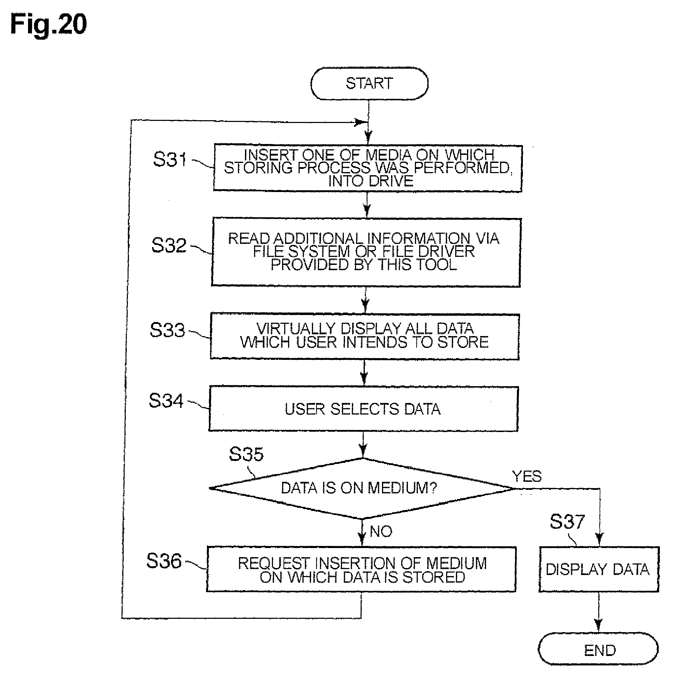

Next, the operation of the process of reading data in the embodiment will be described with reference to Fig. 20.

When one of the plural removable media on which the storing process was performed by the operation of Fig. 19 is inserted into the ODD 122 (block S31), the information management tool 201 executes reading of the additional information on the removable medium via a file system or file driver provided by the tool (block S32), and, based on the additional information, displays identification information of the plural data which were stored onto the plural removable media as a result of the storing request performed by the user (block S33).

The user selects one of the plural data, and issues the reading request (block S34). Based on the additional information, the information management tool 201 determines whether the data requested to be read exists on the removable medium in the ODD 122 or not (block S35). If the data requested to be read does not exist on the removable medium in the ODD 122, the information management tool 201 displays a message requesting to insert the removable medium on which the data is stored, into the ODD 122 (block S36), and the process starting from block S31 is repeated. If the data requested to be read exists on the removable medium in the ODD 122, the information management tool 201 executes the reading of the data, and displays the contents of the data (block S37).

As described above, according to the embodiment, additional information related to all data requested to be stored by the user are stored onto plural removable media, respectively. Even when any one of the removable media is inserted into the ODD 122, therefore, the file catalog of the respective data which are stored on the plural removable media can be displayed by referring the additional information stored on the removable medium, and information indicative of the removable medium which is the storage destination of the data requested to be read by the user can be displayed, so that the user can immediately read out the desired data.

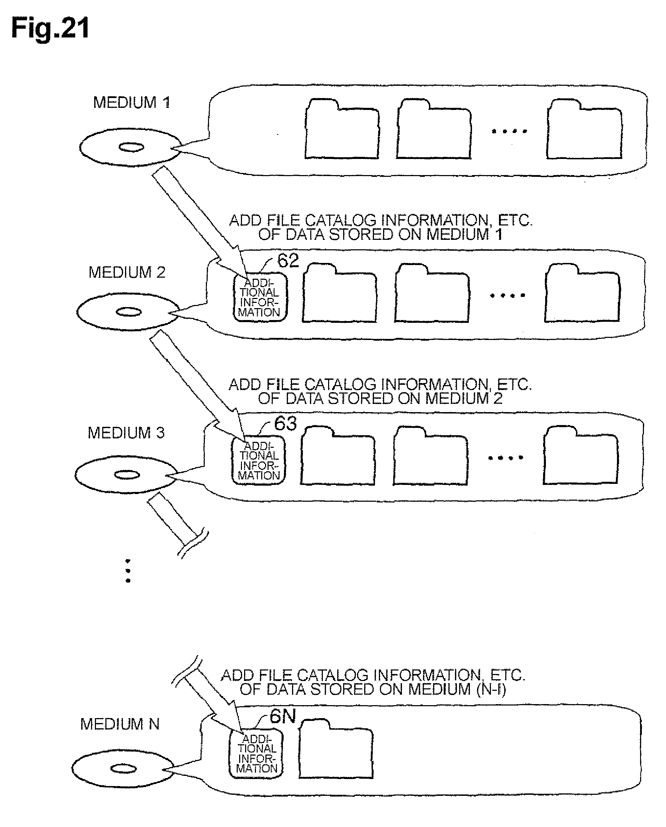

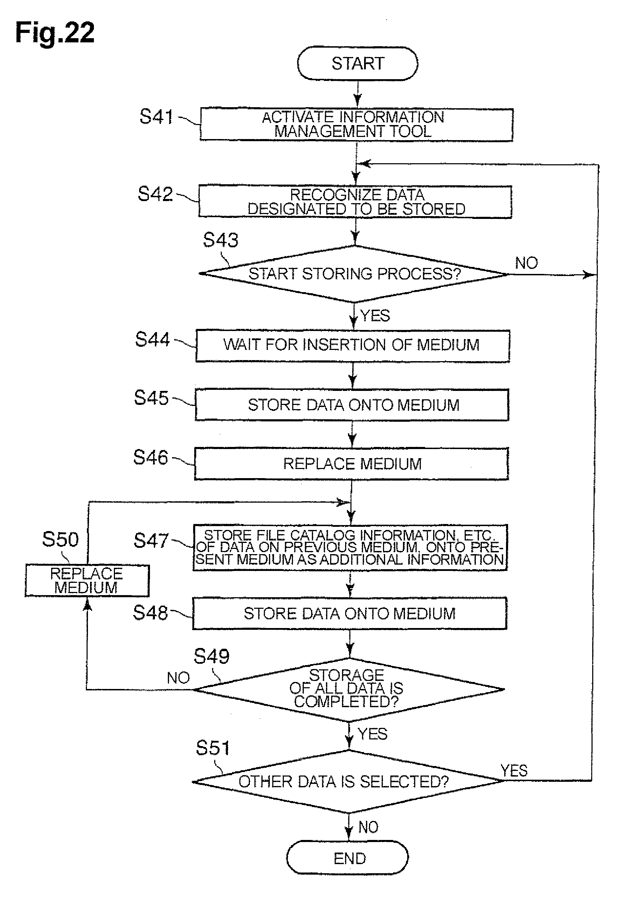

Next, another embodiment which is different from the above-described embodiment will be described with reference to Figs. 21 and 22. Hereinafter, only portions different from the above-described embodiment will be described.

In the case where plural data requested to be stored are so large that they cannot be stored onto one removable medium, the information management tool 201 of the embodiment does not particularly perform the above-described allocation process. Among the functions of the information management tool 201 shown in Fig. 3, therefore, the allocation processing section 34 is not necessary.

Fig. 21 is a conceptual diagram showing a manner of storing plural data divided among plural removable media by a technique different from that of Fig. 5.

As shown in Fig. 21, the information management tool 201 sequentially stores respective data requested to be stored, with starting from the first medium 1, and, at a timing when the data cannot be further stored onto the first medium 1, switches the storage destination of the data to the second medium 2.

Next, the information management tool 201 stores additional information 62 having: file catalog information indicative of the file catalog of the data which are stored on the first medium 1; and media-data correspondence information indicating that the data are stored on the first medium 1, onto the second medium 2. Next, the information management tool 201 sequentially stores respective data which cannot be stored onto the first medium 1, onto the second medium 2, and, at a timing when the data cannot be further stored onto the second medium 2, switches the storage destination of the data to the third medium 3.

Next, the information management tool 201 stores new additional information 63 having: file catalog information indicative of the file catalog of the data which are stored on the second medium 2; media-data correspondence information indicating that the data are stored on the second medium 2; and the additional information 62 which is stored on the second medium 2, onto the third medium 3. Next, the information management tool 201 sequentially stores respective data which cannot be stored onto the second medium 2, onto the third medium 3, and, at a timing when the data cannot be further stored onto the third medium 3, switches the storage destination of the data to the fourth medium 4. The above process is repeated on the subsequent media.

Each of the third and subsequent media is expressed as an i-th medium. The information management tool 201 stores new additional information having: file catalog information indicative of the file catalog of data which are stored on an (i-1)-th medium; media-data correspondence information indicating that the data are stored on the (i-1)-th medium; and additional information which is stored on the (i-1)-th medium, onto the i-th medium, and stores at least part of unstored data of all data requested to be stored.

As a result, on the N-th medium N which is lastly used, additional information 6N which has been sequentially accumulated with starting from the first medium is stored, and remaining unstored data are stored.

When the user inserts the N-th medium N into the ODD 122 after the storing process is completed, at the request of the user, the information management tool 201 can display the file catalog of the respective data stored on the media 1 to N-1 other than the medium N on the basis of the additional information 6N, and display the contents of the data stored on the medium N. Therefore, the embodiment can provide the user with information in a similar manner to the above-described embodiment.

Also when the user inserts the i-th medium i into the ODD 122, at the request of the user, the information management tool 201 can display the file catalog of the respective data stored on the media 1 to i-1 other than the medium i on the basis of the additional information 6i, and display the contents of the data stored on the medium i. Therefore, the user can read out desired data stored on the media 1 to i.

In the storing process, the storage of the media-data correspondence information onto each medium may be omitted. In this case, the information management tool 201 cannot display information indicative of a medium which is a storage destination of the data requested to be read out, but the user can read out desired data by sequentially replacing the media in descending order of the medium number.

Next, the operation of a data storing process different from that of Fig. 19 will be described with reference to Fig. 22.

The information management tool 201 which is installed in the computer 10 is activated (block S41), and a screen for, for example, requesting storing of data onto a removable medium is displayed. In the screen, the user selects plural data to be stored, and then executes the storing request. The information management tool 201 receives the storing request. and recognizes the contents of the request (block S42), and waits for user instructions for starting the storing process (block S43). When the storing process is instructed to start, the information management tool 201 displays a message prompting to insert the first removable medium, and enters a state waiting for insertion of the medium (block S44).

When a first removable medium is inserted, the information management tool 201 stores part of the plural data requested to be stored, as far as possible onto the removable medium (block S45), and, at a timing when the data cannot be further stored onto the medium, displays a message prompting to replace the medium with a second removable medium (block S46).

When a removable medium is inserted, the information management tool 201 stores new additional information including: file catalog information indicative of the file catalog of the data which are stored on the previous medium; media-data correspondence information indicating that the data are stored on the previous medium; and additional information which is stored on the previous medium (however, additional information is not stored in the first removable medium), onto the removable medium (block S47). Then, the information management tool 201 stores part of unstored ones of all the data requested to be stored, as far as possible onto the remaining region of the removable medium (block S48).

The information management tool 201 determines whether the storage of all the data requested to be stored is completed or not (block S49). If not completed, the tool displays a message prompting to replace the removable medium with another medium (block S50), and the process starting from block S47 is repeated.

After the storage of all the data requested to be stored is completed, the information management tool 201 determines whether the user further requests the storage of data other than the plural data or not (block S51). If the further data storage is requested, the process starting from block S42 is repeated, and, if no further data storage is requested, the process is terminated.

The operation of the data reading process is substantially identical with that of Fig. 20, and therefore its description is omitted.

As described above, according to the other embodiment, when the removable medium which is lastly used in the storing process is inserted into the ODD 122, for example, the file catalog of the respective data which are stored in the plural removable media can be displayed by referring the additional information stored on the removable medium, and information indicative of the removable medium which is the storage destination of the data requested to be read by the user can be displayed, so that the user can immediately read out the desired data.

The invention is not limited to the foregoing embodiments but various changes and modifications of its components may be made without departing from the scope of the present invention. Also, the components disclosed in the embodiments may be assembled in any combination for embodying the present invention. For example, some of the components may be omitted from all the components disclosed in the embodiments. Further, components in different embodiments may be appropriately combined.

## Claims

1. An information processing apparatus comprising:
an interface unit that receives a storing request for storing a plurality of files onto a plurality of removable storages; and
a processing unit that performs a storing process in response to the storing request received by the interface unit, the storing process including storing a subset of the plurality of files and additional information onto at least one of the plurality of removable storages,
wherein the additional information includes:
file catalog information that indicates a file catalog of the plurality of files that is to be stored onto the plurality of removable storages other than the one of the plurality of removable storages; and
correspondence information that indicates correspondences of each of the plurality of files with a corresponding removable storage that stores the each of the plurality of files.

2. The information processing apparatus according to claim 1, further comprising a display control unit that obtains the file catalog information from one of the plurality of removable storages that stores the additional information, and controls a display to display the file catalog of the plurality of files based on the obtained file catalog information.

3. The information processing apparatus according to claim 2,
wherein the interface unit further receives a reading request for reading out one of the plurality of files from one of the plurality of removable storages,
wherein the processing unit further performs a reading process in response to the reading request, the reading process including:
when the one of the files requested to be read out is stored onto the one of the removable storages, reading out the one of the files; and
when the one of the files requested to be read out is not stored onto the one of the removable storage, obtaining information that indicates the corresponding removable storage that stores the one of the files, from the correspondence information stored on the one of the removable storages, and controlling the display control unit to control the display to display the obtained information.

4. The information processing apparatus according to claim 1, wherein the processing unit performs the storing process further including determining a required number of the plurality of removable storages and the correspondences, based on sizes of the plurality of files and storage capacities of the plurality of removable storages.

5. The information processing apparatus according to claim 4, wherein the storing step sequentially stores the plurality of files and the additional information onto the plurality of removable storages.

6. The information processing apparatus according to claim 1, wherein the processing unit performs the storing process including:
storing, onto a first removable storage included in the plurality of removable storages, a subset of the plurality of files;
storing, onto a subsequent removable storage included in the plurality of removable storages, an another subset of the plurality of files and the additional information that includes:
the file catalog information indicating the file catalog of the subset of the plurality of files that is stored onto a preceding removable storage; and
the correspondence information indicating the correspondences of each of the files stored in the preceding removable storage with the preceding removable storage.

7. An information processing method that is applied to an information processing apparatus, the apparatus being capable of performing a data processing using removal storages, the information processing method comprising:
receiving a request for storing a plurality of files onto a plurality of removable storages;
performing a storing process in response to the received storing request, the storing process including storing a subset of the plurality of files and additional information onto at least one of the plurality of removable storages,
wherein the additional information includes:
file catalog information that indicates file catalog of the plurality of files that is to be stored onto the plurality of removable storages other than the one of the plurality of removable storages; and
correspondence information that indicates correspondences of each of the plurality of files with a corresponding removable storage that stores the each of the plurality of files.

8. The information processing method according to claim 7, further comprising:
obtaining the file catalog information from one of the plurality of removable storages that stores the additional information; and
controlling a display to display the file catalog of the plurality of files based on the obtained file catalog information.

9. The information processing method according to claim 8, further includes:
receiving a reading request for reading out one of the plurality of files from one of the plurality of removable storages;
performing a reading process in response to the received reading request, the reading process including:
when the one of the files requested to be read out is stored onto the one of the removable storages, reading out the one of the files from the one of the removable storages, and
when the one of the files requested to be read out is not stored on the one of the removable storages, obtaining information that indicates the corresponding removable storage that stores the one of the files, from the correspondence information stored on the one of the removable storages, and controlling the display to display the obtained information.

10. The information processing method according to claim 7, further comprising determining a required number of the plurality of removable storages and the correspondences, based on sizes of the plurality of files and storage capacities of the plurality of removable storages.

11. The information processing method according to claim 10, wherein the storing step sequentially stores the plurality of files and the additional information onto the plurality of removable storages.

12. The information processing method according to claim 7, wherein the storing process further includes:
storing, onto a first removable storage included in the plurality of removable storages, a subset of the plurality of files;
storing, onto a subsequent removable storage included in the plurality of removable storages, an another subset of the plurality of files and the additional information that includes:
the file catalog information indicating the file catalog of the subset of the plurality of files that is stored onto a preceding removable storage; and
the correspondence information indicating the correspondences of each of the files stored in the preceding removable storage with the preceding removable storage.

13. A computer program product for enabling a computer to perform a data processing using removable storages comprising:
software instructions for enabling the computer to perform predetermined operations, and
a computer readable medium bearing the software instructions;
the predetermined operations including:
receiving a storing request for storing a plurality of files onto a plurality of removable storages; and
performing a storing process in response to the received storing request, the storing process including storing a subset of the plurality of files and additional information onto at least one of the plurality of removable storages,
wherein the additional information includes:
file catalog information that indicates a file catalog of the plurality of files that is to be stored onto the plurality of removable storages other than the one of the plurality of removable storages; and
correspondence information that indicates correspondences of each of the plurality of files with a corresponding removable storage that stores the each of the plurality of files.

14. The computer program product according to claim 13, wherein the predetermined operations further includes:
obtaining the file catalog information from one of the plurality of removable storages that stores the additional information; and
controlling a display to display the file catalog of the plurality of files based on the obtained file catalog information.

15. The computer program product according to claim 14, wherein the predetermined operation further includes:
receiving a reading request for reading out the one of the plurality of files from one of the plurality of removable storages;
performing a reading process in response to the received reading request, the reading process including:
when the one of the files requested to be read out is stored onto the one of the removable storages, reading out the one of the files from the one of the removable storages, and
when the one of the files requested to be read out is not stored on the one of the removable storages, obtaining information that indicates the corresponding removable storage that stores the one of the files, from the correspondence information stored on the one of the removable storages, and controlling the display to display the obtained information.

16. The computer program product according to claim 13, wherein the storing process further includes determining a required number of the plurality of removable storages and the correspondences, based on sizes of the plurality of files and storage capacities of the plurality of removable storages.

17. The computer program product according to claim 16, wherein the storing step sequentially stores the plurality of files and the additional information onto the plurality of removable storages.

18. The computer program product according to claim 13, wherein the storing process further includes:
storing, onto a first removable storage included in the plurality of removable storages, a subset of the plurality of files;
storing, onto a subsequent removable storage included in the plurality of removable storages, an another subset of the plurality of files and the additional information that includes:
the file catalog information indicating the file catalog of the subset of the plurality of files that is stored onto a preceding removable storage; and
the correspondence information indicating the correspondences of each of the files stored in the preceding removable storage with the preceding removable storage.
